# EUROPEAN PATENT APPLICATION

(11) **EP 3 670 878 A1**
(43) Date of publication of application: **24.06.2020**
(21) Application number: 18214206.7
(22) Date of filing: 19.12.2018
(51) Int. Cl.: F02D 19/06, F02D 41/00, F02D 41/14, F02M 21/02, F02M 25/00, F01N 3/20

(54) **INTERNAL COMBUSTION ENGINE**

(71) Applicant: Winterthur Gas & Diesel Ltd., 8401 Winterthur (CH)
(72) Inventor: Brutsche, Martin, 8418 Schlatt (CH); Kadau, Dirk, 8046 Zürich (CH)
(74) Representative: Hepp Wenger Ryffel AG

(57) **Abstract**

The present invention is directed to an internal combustion engine (20) having at least one cylinder, preferably a large vessel engine with at least one cylinder having an inner diameter of at least 200mm, and to a method for reducing NOₓ emissions of an internal combustion engine. The cylinder (21) is adapted to run with slow engine speed, with a maximal engine speed of smaller 600 rpm, preferably smaller than 200 rpm, more preferably smaller than 150 rpm, and/or a minimal cycle time of greater 0.1s. The internal combustion engine comprises at least one dosing unit (24) for dosing a reductant, in particular comprising NH₃, into the cylinder (21), preferably at least one dosing unit for each cylinder (21).

## Description

The present invention is directed to an internal combustion engine having at least one cylinder, preferably a large vessel engine with at least one cylinder having an inner diameter of at least 200mm, and to a method for reducing NOₓ emissions of an internal combustion engine.

The invention relates to the technical field of combustion engines and the reduction of their emissions.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), Biological Fuels (e. g. Oil made from algae), Hydrogen, Synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I ... III standards inter alia define the NOₓ emission standards for existing and new marine engines.

For large ships the emissions requirements have been increasing, in particular with regard to the nitrogen oxides emissions. Thus, there is a need to reduce the amount of nitrogen oxides in the exhaust gas emitted by the internal combustion engines of these ships.

SCR (selective catalytic reduction) technology is used to reduce the level of nitrogen oxides (NOₓ) in an exhaust gas of a combustion engine. SCR is commonly used in land based engines, e.g. heavy duty vehicles, industrial plants and other applications.

SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with ammonia (NH₃). Typically, ammonia is generated by injecting an ammonia precursor substance, such as a urea solution, into the exhaust gas of the combustion engine. The urea solution for example is sprayed via nozzles into the hot exhaust gas, where the liquid urea solution reacts to ammonia, carbon dioxide and water vapour. The ammonia then reduces the nitrogen oxides under the influence of a catalyst in an SCR reactor to nitrogen (N₂) and water (H₂O). The generation of ammonia from liquid urea is endothermic. Thus, decomposition of the urea solution is only complete and the nitrogen oxides (NOₓ) are only reduced to nitrogen (N₂), if the exhaust gas is sufficiently hot.

Hence, SCR catalysts usually can only be used at higher temperatures. As long as the appropriate temperature has not been reached, the SCR catalyst works inefficiently, the SCR catalyst has to be bypassed or a so called "fuel penalty" is necessary for heating. Typically, large volume SCR reactors are needed, in which the exhaust gas has a sufficient residence time. Large volume SCR reactors need a lot of space and are cost intensive.

Catalysts typically being used for SCR technology either comprise Vanadium, Tungsten supported by TiO₂ or are metal substituted Zeolites, like for example Cu/Zeolite or Fe/Zeolite. Vanadium promotes oxidization of NOₓ. However, the Vanadium content has to be kept low, because otherwise at high engine loads and respective high temperatures, SO₂ is oxidized to SO₃, when above a certain concentration, SO₃ creates a blue plume of sulphuric acid in and downstream of the funnel, which has to be prevented at any cost. Higher Vanadium contents may also lead to oxidation of NH₃ to NOₓ at temperatures of above 350°C. Thus, more reducing agent has to be injected. Furthermore higher Vanadium contents and especially the combination of vanadium and tungsten encourage an increased production of N₂O at temperatures of above 350°C.

WO2015/030660 discloses a method for the control of a combustion machine, wherein additive in injected directly into the combustion engine's combustion chamber. As the temperature usually is high within the cylinder the wanted reaction rate may be achieved without a catalyst. However, if temperature is not sufficiently high enough for the additive to evaporate, the additive may attach to the wall surfaces and a successive build-up of deposit may occur. WO2015/030660 proposes to estimate the nitrogen oxides resulting during combustion and the combustions chamber's temperature, so that a suitable amount of additive may be injected.

A further problem may arise from the time window until the next stroke occurs. When the time window is not long enough, not all of the injected additive may be used. So the wanted reaction cannot be fully achieved. Unreduced nitrogen oxides and excess reductant leave the cylinder.

A further complication is caused by insufficient mixing. In general, more nitrogen oxides will form in the centre and less near the walls, as the walls are cooler than the centre. Thus, more ammonia must find its way to the centre and less near the walls, otherwise nitrogen oxides in the centre meet insufficient ammonia for reduction and excess ammonia near the walls slips through.

It is therefore an object of the present invention to prevent the drawbacks of the prior art and in particular to create an internal combustion engine and a method for reducing NOₓ emissions of an internal combustion engine ensuring reduced operational costs, a reduced size of the aftertreatment system, a minimized emission of side-reaction products, such as N₂O and SO₃ and/or a reduced dosing of a reducing agent, such as ammonia or an ammonia precursor substance.

The object is accomplished by an internal combustion engine having at least one cylinder, having an inner diameter of at least 200mm, wherein the cylinder is adapted to run with slow engine speed, wherein the internal combustion engine comprises at least one dosing unit for dosing a reductant, in particular comprising NH₃, into the cylinder.

The cylinder is adapted to run with a maximal engine speed of smaller than 600 rpm, preferably smaller than 200 rpm, more preferably smaller than 150 rpm.

Additionally or alternatively, the cylinder is adapted to run with a minimal cycle time of greater 0.1s.

The reductant may be an ammonia precursor substance, such as a urea solution. Preferably the reductant is ammonia.

In the cylinder a so called selective non catalytic reduction (SNCR) may take place.

Either ammonia or urea may be injected into the cylinder where the exhaust gas typically is between 760 and 1090°C to react with the nitrogen oxides formed in the combustion process. The resulting product of the chemical redox reaction is molecular nitrogen (N₂), carbon dioxide (CO₂), and water (H₂O).

Urea (NH₂CONH₂) generally is easier to handle and to store than the more dangerous ammonia (NH₃). In the process it may react like ammonia: NH₂CONH₂ + H₂O -> 2NH₃ + CO₂.

The reduction happens according to (simplified) 4 NO + 4 NH₃ + O₂ -> 4 N₂ + 6 H₂O. The reaction mechanism itself involves NH₂ radicals that attach to NO and then decompose.

Preferably the engine comprises at least one dosing unit for each cylinder. Hence, the reduction may take place in all cylinders.

The slow engine speed guarantees, that there is enough time for carrying out the reducing reaction. The reductant has enough time to spread in the cylinder, to reach all of the exhaust gas and to mix sufficiently. The reductant also meets parts of the exhaust gas which are located in the centre of the cylinder where the biggest amounts of NOₓ are formed. Hence, the reduction may take place as soon as the NOₓ is produced and as along the exhaust gas is not jet expelled from the cylinder before a new cycle starts. At the time when the exhaust gas leaves the cylinder there might be remaining reductant which was not used for reduction within the cylinder.

In a preferred embodiment of the invention the internal combustion engine comprises a device for reducing the NH₃ slip arranged downstream the cylinder.

If not all of the injected reductant is used for the reduction reaction within the cylinder, the remaining reductant will leave the cylinder together with the exhaust gas, before for the next cycle new starts and new reductant will be injected.

Unreacted ammonia is considered as a pollutant and thus should be removed before the exhaust gas leaves the funnel.

The device for reducing the NH₃ slip may comprise a SCR catalyst.

In the SCR catalyst typically a reductant, such as anhydrous ammonia, aqueous ammonia or urea is used for converting nitrogen oxides, with the aid of a catalyst into diatomic nitrogen N₂, and water H₂O. Carbon dioxide CO₂ is a reaction product when urea is used as the reductant.

Thus, an SCR catalyst may augment the reduction reaction which has started in the cylinder. Since most of the nitrogen oxides have been reduced in the cylinder, only a small part of the total exhaust gas has to be treated in the SCR catalyst. Hence, only a small SCR catalyst is necessary.

The SCR catalyst may be part of an SCR Reactor, which comprises a dosing unit for an additive, such as urea or ammonium. Hence, any remaining nitrogen oxides in the exhaust gas may be reduced, even when there is no NH₃ slip and no excess reductant is expelled from the cylinder.

The device for reducing the NH₃ slip may comprise a hydrolysis catalyst.

The hydrolysis catalyst usually helps to hydrolyze HNCO to NH₃ and to decompose urea molecules to HNCO and NH₃. Furthermore, at exhaust gas temperatures which are present at high loads, not only the hydrolysis takes place within the hydrolysis catalyst, but also a side reaction, similar to an SCR reaction, wherein NOₓ is significantly reduced with the help of excess NH₃ expelled from the cylinder.

The device for reducing the NH₃ slip may comprise a NH₃ slip catalysis device, for example an ammonia oxidation catalyst (AOC). The reductant is absorbed onto the catalyst.

As the majority of the nitrogen oxides are reduced in the cylinder the device for reducing the NH₃ slip only serves for removing the remainder. Hence, preferably the total volume of the device for reducing the NH₃ slip is smaller than 400 l/MW.

Within this invention the volume of the catalyst is understood as the envelope volume of the catalyst.

In a preferred embodiment of the internal combustion engine the device for reducing the NH₃ slip includes Vanadium, wherein preferably the percentage of Vanadium is smaller than 0.7%, preferably smaller than 0.5% with respect to the total weight of a catalyst coating.

Vanadium promotes oxidization of NOₓ. But as the majority of the nitrogen oxides are reduced in the cylinder the device for reducing the NH₃ slip only serves for removing the remainder. Hence, only a small Vanadium content is necessary.

The Vanadium content is kept low, such that there is only low emission of SO₃ and N₂O.

Additional reducing agent to be injected can be saved.

In a beneficial embodiment of the invention, the internal combustion engine comprises a turbocharger for supplying fresh air to the cylinder.

The exhaust gas is sent to a turbine of the turbocharger and is used to rotate the turbine. A compressor of the turbocharger uses rotary power generated by the turbine to pressurize a suction gas, namely fresh air.

Typically, a reduction catalyst is arranged downstream the turbine and exhausted by a funnel, such that there is no pressure reduction due to the residence time of the exhaust gas in the SRC catalyst.

In a preferred embodiment the device for reducing the NH₃ slip, preferably a SCR reactor, is arranged upstream the turbocharger.

The high-pressure arrangement allows for a better performance, since the exhaust gas is not significantly cooled down before entering the device for reducing the NH₃ slip. Furthermore, there is no significant pressure drop, as there is only need for a small device for reducing the NH₃ slip and thus, the travel time of the exhaust gas is short before reaching the turbocharger. In case a sulphurous fuel is used, ammonium bisulphate may be produced when the temperature of the exhaust gas is too low. Downstream the turbocharger the temperature often is too low and one would have to increase the exhaust gas temperature artificially to avoid the formation of ammonium bisulphate. This leads to higher consumption/costs. Upstream the turbocharger the temperature still is high enough, such that no ammonium bisulphate develops.

In a preferred embodiment of the internal combustion engine the dosing unit for dosing a reductant into the cylinder comprises a pre-evaporator for producing gaseous NH₃. Hence, the reduction reaction can start as soon as the gaseous NH₃ enters the cylinder. No time is needed for a decomposition of urea molecules to NH₃.

Preferably the dosing unit comprises a control unit for controlling the dosage.

Beneficially the dosing unit is adapted to dose an amount of a reductant per cycle into the cylinder, which at least stoichiometrically corresponds to the exhaust gas produced during one cycle.

Hence, preferably the dosing unit comprises a control unit being adapted for processing cylinder data, such as data concerning the load, the fuel amount used in the cylinder, the temperature in the cylinder and/or the engine speed. The dosing unit may be adapted for determining the amount of the reductant to be dosed on the basis of the cylinder data.

The control unit may be adapted for setting at least one point of time and/or a time span for dosing. The dosing can be adapted in time to the movement of the piston. For example dosing could be provoked when the piston moves downwardly. If reductant is dosed into the cylinder too late, that is shortly before the cycle ends and the gas is expelled from the cylinder, the reductant may not have the time for performing the reducing reaction.

The control unit may be adapted for a successive dosing of the reductant.

In an advantageous embodiment of the invention, the internal combustion engine comprises a NOₓ-sensor.

A NOₓ-sensor is meant to name a device for measuring data allowing for indicating the NOₓ content. Preferably the NOₓ-sensor measures NOₓ values.

The NOₓ-sensor preferably is arranged downstream of the cylinder. Hence, the NOₓ-sensor provides information about the effectivity of the reduction reaction within the cylinder.

Preferentially the internal combustion engine comprises a control unit for comparing a determined NOₓ value with a reference value. The control unit may adjust the amount of reductant to be dosed into the cylinder on the basis of the determined NOₓ value or on the basis of the difference between the determined NOₓ value and a reference value.

Depending on the determined NOₓ value or the difference between the determined NOₓ value and a reference value the amount of the reductant to be dosed may be increased or decreased.

Advantageously the dosing unit is arranged on the same axial position as the fuel injection unit. Preferably the reductant is injected at a different angle to the axis of the cylinder than the fuel.

The dosing unit may be arranged in the liner and/or in the cover of the cylinder. Alternatively or additionally, there may be a dosing unit in the piston.

For example the dosing unit may comprise a plurality of nozzles equally distributed around the cylinder volume.

After leaving the cylinder the exhaust gas cools down. When the NOₓ reduction in the exhaust gas only takes place in an exhaust gas aftertreatment system, that is downstream of the cylinder, typically, there is a first threshold for the engine load, below of which NOₓ reduction is technically not possible.

Between a first and a second threshold a fuel penalty is necessary to reach sufficient temperature such that an SCR catalyst works properly. Only above the second threshold value the SCR reactor operates as desired. As all of the NOₓ is reduced in the SCR catalyst, the catalyst has to provide a sufficient capacity. This may lead to an enhanced emission of N₂O and SO₃.

When the NOₓ is reduced within the cylinder, reduction may start from very low loads. An aftertreatment system is only needed to remove excess reductant and eventually to remove incompletely reduced NOₓ at very high loads. Hence, there is only a need for a small aftertreatment system. Thus, there also NOₓ reduction at small loads, there is no necessity for a fuel penalty at a lower engine load, and there is no excessive emission of N₂O and SO₃.

The object of the invention is also accomplished by a method for reducing NOₓ emissions of an internal combustion engine, preferably a combustion engine as described above, comprising the following steps.

The internal combustion engine is run with a slow engine speed of smaller 600 rpm, preferably smaller than 200 rpm, more preferably smaller than 150 rpm, and/or a cycle time of greater 0.1s.

A reductant, in particular comprising NH₃, is dosed into the cylinder.

Preferably the amount of NOₓ in the cylinder is reduced by at least 50%, preferably by at least 70%, more preferably by at least 76%.

The exhaust from this combustion process preferably is cleaned to comply with the existing rules such as IMO Tier III.

In a beneficial step of the method the amount of reductant to be dosed into the cylinder per cycle and/or per volume of the cylinder is determined such that the amount of reductant stoichiometrically corresponds to the amount of NOx produced in the cylinder per cycle.

The amount of reductant may be calculated on the basis of a NOₓ value determined in the cylinder.

The amount of reductant may be calculated as a feedback reaction on the basis of a NOₓ value determined downstream of the cylinder.

The amount of reductant may also be determined from a map correlating fuel command, engine speed and amount of NOₓ produced in the cylinder.

In preferential embodiment the method comprises the step of determining the NOₓ content in the exhaust gas.

The NOₓ content may be determined in the cylinder or downstream of the cylinder.

Preferentially the measured NOₓ content is compared with a predetermined reference value.

More preferentially the dosage of the reductant dosed into the cylinder is adjusted on the basis of the determined NOₓ content or on the difference of the measured NOₓ content and the reference value.

In and advantageous embodiment of the method exhaust gas leaving the cylinder is guided to a device for reducing the NH₃ slip.

The device for reducing the NH₃ slip in particular comprises at least one of a SCR catalyst, a hydrolysis catalyst and NH3 slip catalysis device.

In the following, the invention is further explained in embodiments by means of a figure:

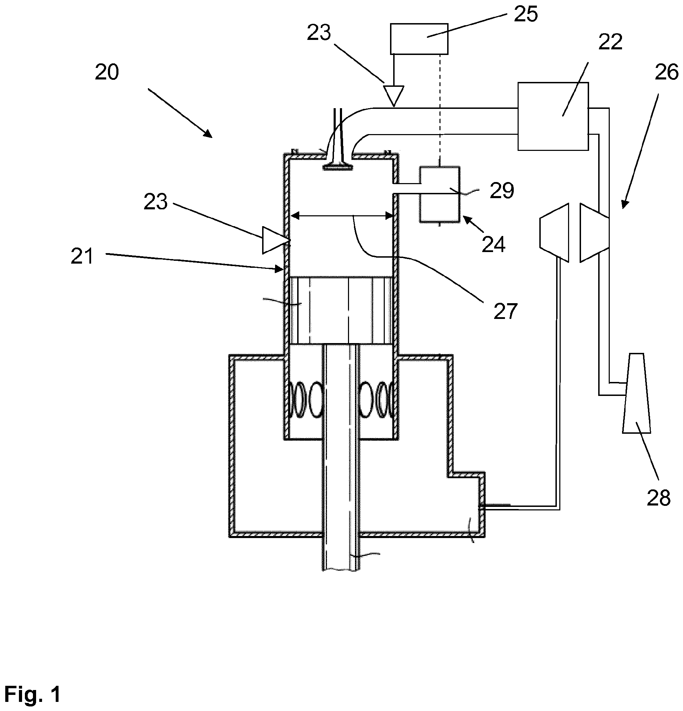

- Figure 1:: shows a schematic view of an example of a combustion engine.

Figure 1 shows a schematic view of an example of an internal combustion engine 20 having a cylinder 21 with an inner diameter 27 of at least 200mm.

The cylinder 21 is adapted to run with slow engine speed, with a maximal engine speed of smaller 600 rpm and/or a minimal cycle time of greater 0.1s.

The internal combustion engine 20 comprises a dosing unit 24 for dosing a reductant, in particular comprising NH₃, into the cylinder 21.
The internal combustion engine 20 comprises a device 22 for reducing the NH₃ slip arranged downstream the cylinder 21, preferably comprising at least one of a SCR catalyst, a hydrolysis catalyst and a NH₃ slip catalysis device, for example an ammonia oxidation catalyst (AOC).

The internal combustion engine 20 comprises a turbocharger 26 for supplying fresh air to the cylinder 21. The device 22 for reducing the NH₃ slip, preferably a SCR reactor, is arranged upstream the turbocharger 26, such that the exhaust gas passes the turbocharger 26 before it reaches the funnel 28.

The dosing unit 24 comprises a pre-evaporator 29 for producing gaseous NH₃.

The dosing unit 24 is adapted to dose an amount of a reductant per cycle into the cylinder, which at least stoichiometrically corresponds to the exhaust gas produced during one cycle.

The internal combustion engine 20 comprises two NOₓ-sensors 23, one arranged in the cylinder and one arranged downstream of the cylinder, and a control unit 25 for comparing measured NOₓ values with a reference value.

The control unit 25 is adapted to for adjusting the amount of reductant to be dosed into the cylinder 21.

## Claims

1. Internal combustion engine (20) having at least one cylinder (21), having an inner diameter (27) of at least 200mm, the cylinder (21) is adapted to run with slow engine speed, with a maximal engine speed of smaller 600 rpm, preferably smaller than 200 rpm, more preferably smaller than 150 rpm, and/or a minimal cycle time of greater 0.1s, wherein the internal combustion engine comprises at least one dosing unit (24) for dosing a reductant, in particular comprising NH₃, into the cylinder (21), preferably at least one dosing unit for each cylinder(21).

2. Internal combustion engine (20) according to claim 1, wherein the internal combustion engine (20) comprises a device (22) for reducing the NH₃ slip arranged downstream the cylinder (21), preferably comprising at least one of a SCR catalyst, a hydrolysis catalyst and a NH₃ slip catalysis device, for example an ammonia oxidation catalyst (AOC).

3. Internal combustion engine (20) according to claim 2, wherein the total volume of the device (22) for reducing the NH₃ slip is smaller than 400 l/MW.

4. Internal combustion engine (20) according to claim 2 or 3, wherein the device (22) for reducing the NH₃ slip includes Vanadium, wherein preferably the percentage of Vanadium is smaller than 0.7%, preferably smaller than 0.5% with respect to the total weight of a catalyst coating.

5. Internal combustion engine (20) according to claim 2 to 4, wherein the internal combustion engine (20) comprises a turbocharger (26) for supplying fresh air to the cylinder (21) and wherein the device (22) for reducing the NH₃ slip, preferably a SCR reactor, is arranged upstream the turbocharger (26) .

6. Internal combustion engine (20) according to one of the preceding claims, wherein the dosing unit (24) comprises a pre-evaporator (29) for producing gaseous NH₃.

7. Internal combustion engine (20) according to one of the preceding claims, wherein the dosing unit (24) is adapted to dose an amount of a reductant per cycle into the cylinder, which at least stoichiometrically corresponds to the exhaust gas produced during one cycle.

8. Internal combustion engine (20) according to one of the preceding claims, wherein the internal combustion engine (20) comprises a NOₓ-sensor (23), preferably arranged downstream of the cylinder, and preferentially a control unit (25) for comparing a measured NOₓ value with a reference value, more preferentially a control unit (25) for adjusting the amount of reductant to be dosed into the cylinder (21).

9. Internal combustion engine (20) according to one of the preceding claims, wherein the internal combustion engine (20) comprises an NOₓ-sensor (23), preferably arranged downstream of the cylinder, and preferentially a control unit (25) for comparing a measured NOₓ value with a reference value, more preferentially a control unit (25) for adjusting the amount of reductant to be dosed into the cylinder (21).

10. Internal combustion engine (20) according to one of the preceding claims, wherein the dosing unit is arranged in the liner or in the cover of the cylinder, preferably in the same axial position as the fuel injection device.

11. Method for reducing NOₓ emissions of an internal combustion engine (20), preferably a combustion engine (20) according to one of claims 1-10, comprising the steps of:
- Running the internal combustion engine (20) with slow engine speed of smaller 600 rpm, preferably smaller than 200 rpm, more preferably smaller than 150 rpm, and/or a cycle time of greater 0.1s;
- Dosing a reductant, in particular comprising NH₃, into the cylinder (21).

12. Method according to claim 10 or 11 comprising the step of
- Reducing the amount of NOₓ in the cylinder by at least 50%, preferably by at least 70%, more preferably by at least 76%.

13. Method according to claim 10 wherein
the amount of reductant to be dosed into the cylinder (21) per cycle and/or per volume of the cylinder (21) is determined such that the amount of reductant stoichiometrically corresponds to the amount of NOx produced in the cylinder per cycle.

14. Method according to one of the claims 11-13 comprising the step of determining the NOₓ content in the exhaust gas, and preferentially comparing the measured NOₓ content with a reference value and more preferentially adjusting the dosage of the reductant dosed into the cylinder (21) on the basis of the determined NOₓ content.

15. Method according to one of the claims 11-14 comprising the step of
- Guiding exhaust gas leaving the cylinder (21) to a device (22) for reducing the NH₃ slip, in particular comprising at least one of a SCR catalyst, a hydrolysis catalyst and NH3 slip catalysis device.
